# EUROPÄISCHE PATENTANMELDUNG

(11) **EP 4 575 939 A1**
(43) Veröffentlichungstag der Anmeldung: **25.06.2025**
(21) Anmeldenummer: 24025015.9
(22) Anmeldetag: 16.12.2024
(51) Int. Cl.: G06Q 10/02, G06Q 10/0631, G06Q 50/06

(54) **VERFAHREN UND VORRICHTUNG ZUR RESERVIERUNG EINER LADEMÖGLICHKEIT FÜR ELEKTROFAHRZEUGE SOWIE COMPUTERVERFAHREN UND COMPUTERLESBARES MEDIUM**

(30) Priorität: 15.12.2023 DE 102023212815
(71) Anmelder: Robert Bosch GmbH, 70442 Stuttgart (DE)
(72) Erfinder: ECKER, Marcel, 76661 Philippsburg (DE); JANJUA, Mariyah, 70499 Stuttgart (DE); BORONKA, Alexander, 74369 Loechgau (DE)

(57) **Zusammenfassung**

Mit der vorliegenden Erfindung wird ausgehend von einem Verfahren und einer Vorrichtung ein System geschaffen, bei dem eine Lademöglichkeit eines Elektrofahrzeugs an einer Ladestation an einem bestimmten Ladeort reserviert werden kann. Dabei kann das Verfahren auch als Computerprogramm realisiert werden, welches auf einem computerlesbaren Medium vorliegt. Die Vorrichtung kann dabei auch in Form einer zentralen Servereinrichtung realisiert sein, welche als Schnittstelle zwischen Nutzer und Ladestation beziehungsweise Ladestellenbestreiber eingesetzt werden kann.

## Beschreibung

Die Erfindung betrifft ein Verfahren und eine Vorrichtung zur Reservierung von Lademöglichkeiten für ein Elektrofahrzeug an einer Ladestation sowie einen zentralen Server, der ein derartiges Verfahren oder eine solche Vorrichtung aufweist, und ein entsprechendes Computerverfahren beziehungsweise ein computerlesbares Medium mit einem derartigen Computerprogramm.

### Stand der Technik

Mit der Verbreitung von Elektrofahrzeugen besteht zunehmend der Bedarf die Lademöglichkeiten an den verfügbaren Ladestationen optimal zu nutzen. Um eine effiziente Nutzung der Ladestationen zu erreichen, besteht die Möglichkeit, den Stellplatz an der Ladestation vorab zu reservieren. Üblicherweise sind bei derartigen Reservierungen die Ankunftszeit, die zu erwartende Ladedauer beziehungsweise die zu ladende Energiemenge anzugeben, um dem Buchungssystem der Ladestation eine effiziente Verwaltung zu ermöglichen. Um die Blockierung der Ladestation außerhalb eines Ladevorgangs zu vermeiden, zum Beispiel aufgrund einer späteren Ankunft oder einer Belegung des Standplatzes nach Ende der Ladezeit, kann eine Reservierungsgebühr oder eine Stellplatzgebühr erhoben werden. Üblicherweise erlauben daher Ladestationen oder auch Ladestellenbetreiber eine Reservierung nur innerhalb einer Vorlaufzeit, wenn der Ladevorgang unmittelbar bevorsteht. So sind beispielsweise Reservierungen mit kurzer Vorlaufzeit, von beispielsweise 30 Minuten bekannt, so dass der Ladestellenbetreiber keine Einnahmeausfälle aus der Ladetätigkeit aufgrund von leer stehenden Ladestationen erwarten muss. Solch eine Reservierung ist üblicherweise dadurch gekennzeichnet, dass zwischen Reservierung und Nutzung kein anderer Fahrer die Ladestation benutzen kann. Weiterhin wird üblicherweise eine Ladestation, die noch benutzt wird, nicht für einen zukünftigen Ladevorgang reservierbar sein, da keine Aussage über das tatsächliche Ende des Ladevorgangs beziehungsweise der Weiterfahrt des Fahrzeugs und somit eine erneute Verfügbarkeit des Ladestellenplatzes gegeben werden kann.

Es soll daher eine Möglichkeit geschaffen werden, eine Vorabreservierung einer Lademöglichkeit an einer Ladestation für einen weiter in der Zukunft liegenden Zeitpunkt oder Zeitraum durchzuführen..

### Offenbarung der Erfindung

Mit der vorliegenden Erfindung wird ausgehend von einem Verfahren und einer Vorrichtung ein System geschaffen, bei dem eine Lademöglichkeit eines Elektrofahrzeugs an einer Ladestation an einem bestimmten Ladeort reserviert werden kann. Ein Ladeort besitzt dabei mindestens eine Ladestation. Dabei kann das Verfahren auch als Computerprogramm realisiert werden, welches auf einem computerlesbaren Medium vorliegt. Die Vorrichtung kann dabei auch in Form einer zentralen Servereinrichtung realisiert sein, welche als Schnittstelle zwischen Nutzer und Ladestation beziehungsweise Ladestellenbestreiber eingesetzt werden kann.

Insbesondere ist darauf hinzuweisen, dass das Verfahren bzw. das Computerprogramm nicht beim Ladestationsbetreiber selbst abläuft, sondern zum Beispiel beim Mobilitätsanbieter des Fahrers.

Das erfindungsgemäße Verfahren beziehungsweise die entsprechende Vorrichtung erfasst zunächst Reservierungsparameter eines Nutzers beziehungsweise eines Fahrers des Elektrofahrzeugs. Bei diesen Reservierungsparametern handelt es sich wenigstens um die Festlegung eines Ladeortes sowie einer Zeitangabe, die beispielsweise einen Zeitpunkt oder eine Zeitdauer repräsentiert. Zusätzlich werden historische Nutzungsdaten der wenigstens einen Ladestation an dem ausgewählten Ladeort erfasst beziehungsweise verwendet, zum Beispiel durchschnittliche Ladezeiten. Ausgehend von diesen historischen Nutzungsdaten, insbesondere dem Ladeverhalten an der wenigstens einen Ladestation, wird eine Wahrscheinlichkeit bestimmt, dass zu den gewünschten Reservierungsparametern, zum Beispiel in dem gewünschten Zeitraum oder zu dem gewünschten Zeitpunkt eine Ladestation für die Beladung des Fahrzeugs mit elektrischer Energie frei wird und somit die Ladestation reservierbar ist. Durch einen Vergleich dieser bestimmten Wahrscheinlichkeit mit einem insbesondere durch den Nutzer oder Fahrer vorwählbaren Wahrscheinlichkeitsschwellenwert kann erkannt werden, ob eine Reservierung möglich sein wird. Ist hier eine hinreichende Wahrscheinlichkeit erkannt worden, zum Beispiel durch die Überschreitung des Wahrscheinlichkeitsschwellenwert, wird unter Berücksichtigung einer Vorlaufzeit der Ladestation zur Reservierung die Reservierung durchgeführt.

Der Vorteil der Erfindung besteht dabei darin, dass das beanspruchte System sowohl aufgrund des historischen Ladeverhaltens als auch auftretender freier Kapazitäten rechtzeitig eine Reservierung eines Stellplatzes beziehungsweise eines Ladeplatzes an dem gewünschten Ladeort oder Ladestation erreichen kann, ohne dass der Nutzer selbst zeitnah sich um die Reservierung kümmern muss.

Der Nutzer kann in einer Ausgestaltung der Erfindung über die Möglichkeit der Reservierung in Abhängigkeit des Vergleichs mittels einer ersten Rückmeldung informiert werden, dass eine Reservierung möglich ist oder nicht.

Bei einer Überschreitung des Wahrscheinlichkeitsschwellenwert durch die bestimmte Wahrscheinlichkeit kann das Verfahren bei Erreichen der Vorlaufzeit der Ladestation die Reservierung vornehmen. Dabei kann optional der Nutzer mittels einer zweiten Rückmeldung über die erfolgte Reservierung informiert werden.

Wie bereits ausgeführt, kann der Nutzer des Verfahrens oder der Vorrichtung einen Zeitpunkt oder eine Zeitdauer vorgeben, in denen eine Lademöglichkeit an dem ausgewählten Ladeort oder alternativ auch an einer gewünschten Ladestation reserviert werden soll. Dabei kann zusätzlich ein bestimmter Zeitraum vor dem gewünschten Zeitpunkt vorgesehen werden, in dem ebenfalls eine Reservierung vorgenommen wird, auch wenn der Nutzer noch nicht bis zu diesem Zeitpunkt an der Ladestation angekommen ist. Da der Nutzer die Ankunftszeit teilweise nicht auf die Minute genau planen kann, hat er so die Möglichkeit, gegebenenfalls auch schon früher die Möglichkeit zur Ladung seines Elektrofahrzeugs wahrzunehmen. Dieser vorbestimmte Zeitraum kann davon abhängig gemacht werden, ob und in welchem Umfang eine etwaige Reservierungszeit bei der Ladestation zu vergüten ist, insbesondere eine Reservierungszeit, in der das Fahrzeug keine Energie bezieht.

Bei der Erfassung und Berücksichtigung von historischen Nutzungsdaten werden Ladeinformationen erfasst, die die durchschnittliche Ladezeit an wenigstens einer der Ladestationen an dem Ladeort repräsentieren. Dabei können beispielsweise bei drei vorhandenen Ladestationen an einem Ladeort die durchschnittlichen Ladezeiten und/oder Belegungszeiten an jeder einzelnen Ladestation berücksichtigt werden, um diejenige Ladestation zu identifizieren, bei der eine Reservierung zur gewünschten Zeitangabe, zum Beispiel zum gewünschten Zeitpunkt möglich ist. Die Reservierungsmöglichkeit kann mit Hilfe einer Wahrscheinlichkeitsüberlegung durchgeführt werden, die auf den historischen Nutzungsdaten basiert. Sollte die Wahrscheinlichkeit, dass zu einem bestimmten Zeitpunkt an dem gewünschten Ladeort eine Ladestation zur Verfügung steht zu gering sein, zum Beispiel geringer als ein vom Nutzer einzustellender Wahrscheinlichkeitswert oder Schwellenwert, wird dem Nutzer sofort mitgeteilt, dass ein Reservierung nicht möglich ist. Alternativ kann dem Nutzer erst dann eine erste positive Rückmeldung zur Reservierung mitgeteilt werden, wenn die Wahrscheinlichkeit, dass eine Ladestation verfügbar sein könnte, einen bestimmten Wahrscheinlichkeitswert überschreitet.

Die durchschnittliche Ladezeit oder Belegungszeit kann auch in Abhängigkeit vom Wochentag, von der Uhrzeit, der abgerufenen Energiemenge, der verwendeten Anschlussleistung, des Wetters und/oder der einzelnen diesen Ladeort oder die dort vorhandenen Ladestationen nutzenden Abnehmer erfasst, analysiert und für die Reservierung herangezogen werden.

Die Reservierung kann zudem erfolgen, indem der Belegungszustands, die erforderliche Reservierungsvergütung und/oder das Wetter an dem Ladeort beziehungsweise der Ladestationen überwacht wird. Hierzu bietet es sich an, einen Beobachtungszeitraum vorzugeben, in dem der Nutzer das Fahrzeug mit Energie versorgen will. Im Gegensatz zu der Angabe eines konkreten Zeitpunkts kann somit ein größerer Zeitraum abgedeckt werden, in dem ein Stellplatz an einer der Ladestationen zur Reservierung frei wird. Wird bei dieser Überwachung ein Stellplatz frei, kann der Nutzer über den möglichen Zeitpunkt des freien Stellplatzes und die Reservierung informiert werden.

In einer weiteren Ausgestaltung der Erfindung ist vorgesehen, dass der Nutzer weitere Reservierungsparameter angibt, die bei der Überwachung der freien Stellplätze an den Ladestationen des gewünschten Ladeorts sowie der entsprechenden Reservierung berücksichtigt werden. So kann die zur Beladung erforderliche Energiemenge und/oder Leistung angegeben werden oder automatisch durch eine Abfrage bei dem entsprechenden Fahrzeug ermittelt werden. Hierbei kann beispielsweise auch angegeben werden, dass der entsprechende Energiespeicher nur bis zu einem bestimmten Prozentsatz beladen werden soll, da eine Beladung der letzten 10-20 % üblicherweise länger dauert als die vorherigen 80 %. Weiterhin kann als Reservierungsparameter eine minimale oder maximale Ladezeit beziehungsweise erforderliche Standzeit an der Ladestation angegeben werden. Da es bei vielfrequentierten Ladestationen öfters vorkommt, dass die Stellplätze nicht zum gewünschten Zeitpunkt frei werden, kann auch eine maximale Wartezeit und/oder eine maximal zu zahlende Reservierungsgebühr angegeben werden. Die Reservierungsgebühr kann dabei sowohl den Reservierungsvorgang als solches als auch die Reservierung für einen Stellplatz vor dem Eintreffen an die Ladestation beinhalten. Eine ähnliche maximale Angabe kann auch vorgenommen werden, wenn eine Standzeitgebühr an einer Ladestation erforderlich ist, wenn das Fahrzeug nach dem Ladevorgang noch am Stellplatz steht, ohne dass es Energie bezieht.

Das erfindungsgemäße Verfahren oder eine Vorrichtung, die ein derartiges Verfahren ausführt, kann in einer zentralen Servereinrichtung realisiert werden. Hierzu benötigt diese zentrale Servereinrichtung ein erstes Empfangsmittel, welches die Reservierungsparameter vom Nutzer erfasst. Weiterhin ist ein zweites Empfangsmittel vorgesehen, welches insbesondere auch mit dem ersten Empfangsmittel kombiniert werden kann, das die historischen Nutzungsdaten der wenigstens einen Ladestation an dem gewünschten Ladeort erfasst. Basierend auf den Reservierungsparametern sowie der historischen Nutzungsdaten kann die zentrale Servereinrichtung die Reservierung zum geeigneten Zeitpunkt an der Ladestation oder bei dem entsprechenden Ladestellenbetreiber veranlassen und dem Nutzer die Reservierung mitteilen. Hierzu ist vorgesehen, dass die zentrale Servereinrichtung mindesten ein Sendemittel enthalt. Die Analyse und Auswertung der Reservierungsparameter sowie der historischen Nutzungsdaten kann in einer gesonderten Auswerteeinheit der zentralen Servereinrichtung erfolgen.

Durch die Nutzung einer zentralen Servereinrichtung kann der Nutzer auf eine Vielzahl von Ladestationen zugreifen und ist nicht an einen Ladestationsbetreiber gebunden. Für die Betreiber der Ladestellen kann im Gegenzug eine Planungssicherheit erreicht werden, da die Auslastung der entsprechenden Ladestationen schon zu einem früheren Zeitpunkt ersichtlich sind. Dies erlaubt den Ladestellenbetreibern schon frühzeitig, die entsprechende Energiemenge bereitzustellen. Die Erfassung der Nutzungsparameter kann beispielsweise über eine App auf einem mobilen Endgerät, über ein Web-Portal, ein Computerinterface oder auch per telefonischer Übermittlung erfolgen.

Statt einer zentralen Servereinrichtung kann das Verfahren auch eigenständig als Applikation auf einem Computer, einem mobilen Endgerät oder im Rahmen eines Navigationssystems realisiert sein. So kann das Verfahren beziehungsweise das Computerprogramm nicht beim Ladestationsbetreiber selbst abläuft, sondern zum Beispiel beim Mobilitätsanbieter des Nutzers/Fahrers oder Flottenbetreibers.

In einer Fortbildung der Erfindung kann vorgesehen sein, dass der Fahrer das vorstehende Verfahren für einen bestimmten Zeitraum deaktiviert.

### Kurze Beschreibung der Zeichnungen

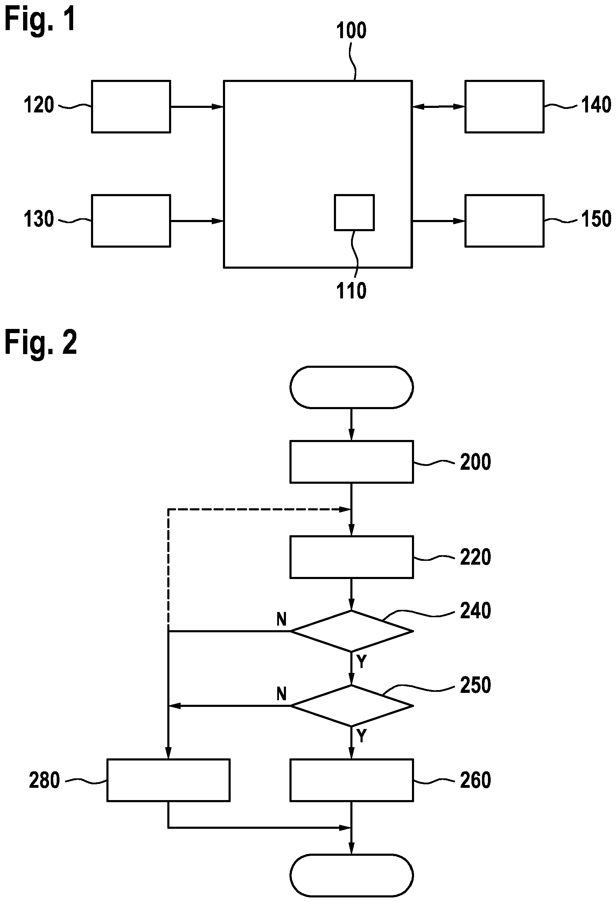

In der Figur 1 wird anhand eines Blockschaltbildes das erfindungsgemäße Prinzip der Reservierung dargestellt. Das Flussdiagramm der Figur 2 zeigt das zugrunde liegende erfindungsgemäße Verfahren.

### Ausführungsformen der Erfindung

Die Reservierung von Ladeplätzen an Ladestationen ist üblicherweise nur kurzzeitig möglich, da die tatsächlichen Ladezeiten beziehungsweise Standzeiten der Fahrzeuge stark variieren. So bietet beispielsweise eine Reservierung mit dem OCPI-Protokoll (Open Charge Point Interface) ausschließlich für Reservierungen mit kurzer Vorlaufzeit vorgesehen. Für Reservierungen mit langer Laufzeit bietet das Protokoll keine Möglichkeiten. Mit der vorliegenden Erfindung wird jedoch ein Verfahren beschrieben, welches die Vorausbuchung von Stellplatzen oder Lademöglichkeiten an Ladestationen auch für einen größeren Zeitraum im Voraus ermöglicht. Hierzu wird ein zweistufiges Verfahren verwendet, bei dem in einer ersten Stufe eine Wahrscheinlichkeit bestimmt wird, dass eine Ladestation in einem gewünschten Zeitraum und/oder zu einem gewünschten Zeitpunkt zur Reservierung frei wird. In einer zweiten Stufe kann unter Berücksichtigung der entsprechenden Reservierungsbedingungen die Ladestation gebucht werden.

Zur Durchführung des Verfahrens kann eine Vorrichtung gemäß der Figur 1 verwendet werden. In dieser Vorrichtung ist eine Verarbeitungseinheit 100 vorgesehen, die optional einen Speicher 110 aufweist. Zur Durchführung der Reservierung einer Lademöglichkeit, erfasst die Verarbeitungseinheit 100 Reservierungsparameter, die wenigstens eine Zeitangabe sowie einen gewünschten Ladeort enthalten. Die entsprechenden Reservierungsparameter können dabei über ein Eingabemittel 120 vom Nutzer eingegeben werden. Typische Eingabemittel können dabei Applikationen auf einem mobilen Endgeräte oder ein Web-Portal auf einem Computer sein. Weiterhin erfasst die Verarbeitungseinheit 100 die historischen Nutzungsdaten einer Ladestelle. Bei der Ladestelle kann es sich dabei beispielsweise um eine einzelne Ladestation oder Wallbox handeln. Vorteilhafterweise weist die Ladestelle jedoch eine Mehrzahl von Ladestationen und/oder Wallboxen auf, um die Verfügbarkeit für die Reservierung zu erhöhen.

Aus den historischen Nutzungsdaten der Ladestation 140, die beispielsweise direkt von der Ladestation 140, der Ladestelle und/oder dem Ladestationsbetreiber 130 abgerufen werden können, kann die Verarbeitungseinheit 100 die durchschnittliche Belegung der Ladestelle an dem gewünschten Ladeort und insbesondere jeder einzelnen Ladestation an dieser Ladestelle ableiten. Durch einen Vergleich mit den Reservierungsparametern kann in einem ersten Prozessschritt erkannt werden, ob eine Reservierung im gewünschten Reservierungszeitraum und/oder zum gewünschten Reservierungszeitpunkt ohne weiteres möglich sein könnte. Akzeptiert die Ladestelle oder die dort befindlichen Ladestationen alternativ auch der Ladestellenbetreiber eine Reservierung, die in der Zukunft liegt, so wird unmittelbar eine Lademöglichkeit an einer der zum gewünschten Zeitpunkt freien Ladestationen reserviert. Ist eine Reservierung jedoch nur kurzfristig oder mit einer kurzen Vorlaufzeit möglich, beobachtet die Verarbeitungseinheit 100 die tatsächliche Belegung der Ladestationen und berücksichtigt im Folgenden die aus den historischen Nutzungsdaten prognostizierte Belegung. Hierzu wird eine Wahrscheinlichkeit bestimmte, dass in dem gewünschten Zeitraum und/oder zu dem gewünschten Zeitpunkt an der gewünschten Ladestelle oder dem Ladeort eine Ladestation 140 frei wird. Erkennt die Verarbeitungseinheit 100 dabei, dass zum gewünschten Zeitpunkt oder für eine gewünschte Zeitdauer in einem optional gewählten Zeitraum mit einer gewissen Wahrscheinlichkeit eine freie Ladestation gebucht werden kann, informiert sie den Nutzer 150 mit einer ersten Rückmeldung darüber, gegebenenfalls auch mit der Einschränkung, dass noch keine endgültige Buchung erfolgt ist und insbesondere dass diese erst später möglich sein wird. Zur Erkennung der möglichen Reservierungsbuchung kann die bestimmte Wahrscheinlichkeit mit einem Schwellenwert verglichen werden, der beispielsweise vom Nutzer vorgegeben wird. Liegt dabei die bestimmte Wahrscheinlichkeit, dass eine freie Ladestation verfügbar ist, unterhalb dieses Schwellenwerts, wird dem Nutzer in der ersten Rückmeldung mitgeteilt, dass keine Reservierung möglich ist. In einem zweiten Prozessschritt

Sobald der gewünschte Reservierungszeitraum und/oder der Reservierungszeitpunkt näher rückt und die Ladestation140 eine insbesondere verbindliche Reservierung akzeptiert, kann das Verfahren entsprechend den gewünschten Reservierungszeitraum und/oder der Reservierungszeitpunkt buchen. Mit dieser Buchung kann das Verfahren dem Nutzer 150 eine zweite Rückmeldung mitteilen, in dem der gewünschte Reservierungszeitraum und/oder der Reservierungszeitpunkt oder dessen Buchung mitgeteilt oder bestätigt wird. Diese zweite Rückmeldung kann von einer Bestätigung der Ladestation oder dessen Betreiber abhängig erzeugt werden. Weiterhin kann die zweite Rückmeldung auch die Informationen zu gegebenenfalls fälligen Reservierungskosten enthalten. Optional kann die Buchung auch erst erfolgen, wenn die Kosten für die Reservierung unter eine vom Nutzer gewählte Kostenschwelle gesunken ist oder sich im weiteren Zeitverlauf nicht mehr ändert.

Der Vorteil bei diesem Verfahren ist somit, dass sich der Nutzer selbst nicht mehr über die Verfügbarkeit der freien Lademöglichkeit bei Reservierungen mit langer Vorlaufzeit kümmern muss.

Ein mögliches erfindungsgemäßes Verfahren zur Durchführung der Reservierung, die noch in weiterer zeitlichen Entfernung liegt, soll im Folgenden anhand des Flussdiagramms der Figur 2 beschrieben werden. Im ersten Schritt 200 werden Reservierungsparameter des Nutzers erfasst. Wesentlich sind dabei die Angabe eines gewünschten Ladeorts, an dem die Beladung stattfinden soll, sowie eine Zeitangabe, zum Beispiel ein gewünschter Zeitpunkt oder eine gewünschte Zeitdauer. Insbesondere ist es ausreichend, wenn ein Ladeort angegeben wird. Die Angabe einer konkreten Ladestation ist nicht notwendig. Darüber hinaus können weitere Reservierungsparameter erfasst werden, die beim Abgleich der Möglichkeit zur Reservierung sowie dem späteren Reservierungsvorgang berücksichtigt werden. So kann beispielsweise die zur Beladung gewünschte oder erforderliche Energiemenge und/oder Leistung angegeben oder automatisch vom Fahrzeug erfasst werden. Weiterhin kann eine minimale oder maximale Ladezeit vorgegeben werden, ebenso wie eine maximale Wartezeit, die in Kauf genommen werden darf. Falls die Ladestelle oder die Ladestation eine Reservierungs- oder Standgebühr verlangt, kann hier ebenfalls ein maximaler Wert angegeben werden, den der Nutzer bereit ist zu zahlen.

Im nächsten Schritt 220 erfasst das Verfahren die Nutzungsdaten desLadeorts beziehungsweise der wenigstens einen Ladestation an dem Ladeort. Bei den Nutzungsdaten handelt es sich im Wesentlichen um das historische Nutzungsverhalten an wenigstens einer der Ladestationen, die an dem ausgewählten Ladeort zur Verfügung stehen, zum Beispiel die durchschnittliche Ladedauer. Um eine genauere Prognose für eine mögliche Reservierung erstellen zu können, können differenzierte historische Nutzungsdaten erfasst oder vom Betreiber der Ladestationen abgerufen werden. So ist denkbar, die Nutzungsdaten getrennt für jede Ladestation einzeln zu erfassen und zu berücksichtigen. Die Nutzungsdaten können zudem nach Wochentagen, Feiertagen, Ferien, Veranstaltungen in der Umgebung und/oder nach der Uhrzeit differenziert werden. Zusätzlich kann (soweit verfügbar) die historische Energiemenge beziehungsweise die historische Leistung erfasst werden. Diese letzten beiden Parameter können zudem dazu genutzt werden, eine Prognose über die Ladungsgeschwindigkeit abzuleiten, wenn diese nicht gesondert erfasst wird. Auch die Belegung und Nutzung der Ladestationen in Abhängigkeit des Wetters kann in die Bestimmung einer Belegungswahrscheinlichkeit einer freien Lademöglichkeit im gewünschten Zeitraum und/oder zum gewünschten Zeitpunkt für die Reservierung einfließen. Optional können auch die aktuelle Belegungssituation sowie die bereits vorliegenden Reservierungen erfasst werden.

Basierend auf den erfassten Reservierungsparametern in Schritt 200 sowie den (historischen) Nutzungsdaten der Ladestelle oder der wenigstens einen Ladestation in Schritt 220 wird im nächsten Schritt 240 geprüft, ob eine Reservierung möglich ist. Bei dieser Prüfung wird aufgrund der zur Verfügung stehenden historischen Nutzungsdaten eine Wahrscheinlichkeit bestimmt, dass an der Ladestelle beziehungsweise dem Ladeort im gewünschten Reservierungszeitraum und/oder zum Reservierungszeitpunkt wenigstens eine Ladestelle frei wird, so dass sie reserviert werden kann. Überschreitet die Wahrscheinlichkeit einen beispielsweise vom Nutzer vorwählbaren Wahrscheinlichkeitsschwellenwert, erhält der Nutzer eine erste Rückmeldung, dass eine Reservierung an dieser Ladestelle im gewünschten Reservierungszeitraum und/oder zum Reservierungszeitpunkt möglich sein wird. Gegebenenfalls kann dieser erste Rückmeldung auch enthalten, dass diese Reservierung noch nicht verbindlich gebucht werden konnte. Diese Wahrscheinlichkeit kann zusätzlich auch weitere Randbedingungen berücksichtigen, wie beispielsweise Wetterbedingungen und/oder Veranstaltungen in der Nähe.

Ist aufgrund der bestimmten Wahrscheinlichkeit eine Reservierung in dem gewünschten Zeitraum oder zu dem gewünschten Zeitraum eher unwahrscheinlich beziehungsweise liegt die Wahrscheinlichkeit unterhalb des Wahrscheinlichkeitsschwellenwerts, wird der Nutzer in einem Schritt 280 über die nicht zustande kommende Reservierung informiert, bevor das Verfahren beendet oder erneut gestartet wird.

Wird jedoch auf der Basis der historischen Nutzungsdaten erkannt, dass aufgrund der bestimmten Wahrscheinlichkeit eine Reservierung möglich sein könnte, wird in einem nächsten Schritt 250 die insbesondere verbindlichen Buchung der Ladestation geprüft. Da üblicherweise Ladestationen erst mit einer kurzen Vorlaufzeit buchbar sind, wartet das Verfahren das Erreichen dieser Vorlaufzeit ab, um die gewünschte Buchung bei der Ladestation oder dem Ladestellenbetreiber zu platzieren. Ist die Buchung erfolgt oder wird die Buchung erfolgen, wird der Nutzer im Schritt 260 über die erfolgreiche Buchung mittels einer zweiten Rückmeldung informiert bzw. die zukünftige Buchung bestätigt. Diese Information des Nutzers im Schritt 260 kann von einer Bestätigung der Ladestation und/oder des Ladestellenbetreiber abhängig gemacht werden.

Sollte im Schritt 250 trotz des Erreichens der Vorlaufzeit zur Buchung der Ladestation keine Reservierung oder Buchung möglich sein, wird der Nutzer ebenfalls wie vorstehend im Schritt 280 über die fehlende Reservierungsmöglichkeit informiert.

Alternativ kann im Schritt 250 bei der Buchung an der Ladestation oder der Ladestelle eine Reservierungsgebühr berücksichtigt werden. Da diese Reservierungsgebühr üblicherweise dann fällig wird, wenn der Reservierungszeitpunkt noch weiter entfernt ist, kann die Buchung und somit die Bestätigung an den Nutzer mittels der zweiten Rückmeldung in Abhängigkeit von der Unterschreitung eines vom Nutzer vorbestimmbaren Kostenschwellenwerts der Reservierungsgebühr abhängig gemacht werden. Dabei kann auch berücksichtigt werden, dass sie dich Reservierungsgebühr bei einer längeren Wartezeit zur Buchung nicht mehr ändert.

Das vorstehend beschriebene Verfahren oder die Vorrichtung, die ein derartiges Verfahren durchführt, können beispielsweise auch in einer zentralen Servereinrichtung betrieben werden. Hierbei kann unabhängig von den verschiedenen Betreiber der Ladestellen eine übergreifende Möglichkeit geschaffen werden, die Lademöglichkeiten an den einzelnen Ladestationen zu reservieren. Zur Eingabe der Reservierungsparameter durch den Nutzer können dabei jegliche elektronischen Vorrichtungen verwendet werden, die eine Datenübertragung an die zentrale Servereinrichtung ermöglichen. So kann der Nutzer beispielsweine eine Applikation auf einem mobilen Endgerät wir einem Smartphone aber auch ein Web-Portal auf einem Computer nutzen. Selbst eine telefonische Eingabe wäre möglich.

## Patentansprüche

1. Verfahren zur Reservierung einer Lademöglichkeit für einen Energiespeicher eines Elektrofahrzeugs an einer Ladestation an einem Ladeort, wobei das Verfahren
• Reservierungsparameter erfasst (200), die wenigstens den Ladeort und eine Zeitangabe beinhalten, und
• Historische Nutzungsdaten der wenigstens einen Ladestation an dem Ladeort erfasst (220), und
• in Abhängigkeit von den historischen Nutzungsdaten und der Zeitangabe eine Wahrscheinlichkeit bestimmt, dass an der Ladestation eine Reservierung einer Lademöglichkeit möglich sein wird, und
• einen Vergleich der Wahrscheinlichkeit mit einem vorwählbaren Wahrscheinlichkeitsschwellenwert durchführt, und
• in Abhängigkeit des Vergleichs und einer Vorlaufzeit der Ladestation eine Reservierung der Ladestation vornimmt.,

2. Verfahren nach Anspruch 1, **dadurch gekennzeichnet, dass** das Verfahren bei einer Überschreitung des Wahrscheinlichkeitsschwellenwert durch die bestimmte Wahrscheinlichkeit den Nutzer des Elektrofahrzeugs mittels einer ersten Rückmeldung informiert.

3. Verfahren nach Anspruch 1 oder 2, **dadurch gekennzeichnet, dass** das Verfahren bei einer Überschreitung des Wahrscheinlichkeitsschwellenwert durch die bestimmte Wahrscheinlichkeit bei Erreichen der Vorlaufzeit der Ladestation die Reservierung vornimmt, wobei insbesondere vorgesehen ist, dass der Nutzer über die Reservierung mittels einer zweiten Rückmeldung informiert wird.

4. Verfahren nach einem der vorhergehenden Ansprüche, **dadurch gekennzeichnet, dass** das Verfahren als Zeitangabe einen Zeitpunkt oder eine Zeitdauer erfasst, wobei insbesondere vorgesehen ist, dass die Reservierung in einem vorbestimmten Zeitraum vor dem Zeitpunkt erfolgt.

5. Verfahren nach einem der vorhergehenden Ansprüchen, **dadurch gekennzeichnet, dass** das Verfahren als historische Nutzungsdaten Ladeinformationen der durchschnittlichen Ladezeit an der wenigstens einen Ladestation erfasst und bei der Reservierung berücksichtigt, wobei insbesondere vorgesehen ist, dass die durchschnittliche Ladezeit in Abhängigkeit
• der Ladestation und/oder
• des Wochentags, und/oder
• der Uhrzeit, und/oder
• der abgerufenen Energiemenge, und/oder
• der verwendeten Leistung, und/oder
• die Ladungsgeschwindigkeit, und/oder
• des Wetters, und/oder
• des Nutzers
erfasst wird.

6. Verfahren nach einem der vorhergehenden Ansprüche, **dadurch gekennzeichnet, dass** das Verfahren die Lademöglichkeit in Abhängigkeit
• vom Belegungszustand, und/oder
• von einer Reservierungsvergütung, und/oder
• des Wetters
in einem Beobachtungszeitraum der wenigstens einen Ladestation am Ladeort reserviert,
wobei insbesondere vorgesehen ist, dass der Beobachtungszeitraum von der Zeitangabe abhängt.

7. Verfahren nach einem der vorhergehenden Ansprüche, **dadurch gekennzeichnet, dass** das Verfahren als Reservierungsparameter
• eine zur Beladung erforderliche Energiemenge, und/oder
• eine zur Beladung erforderliche Leistung, und/oder
• eine minimale oder maximale Ladezeit, und/oder
• eine maximale Wartezeit, und/oder
• eine maximale Reservierungsvergütung
erfasst, und die Ladestation zusätzlich abhängig von wenigstens einem dieser Reservierungsparameter reserviert.

8. Vorrichtung zur Reservierung einer Lademöglichkeit für ein Elektrofahrzeug an einer Ladestation an einem Ladeort, mit einer Verarbeitungseinheit (100), die ein Verfahren nach einem der Ansprüche 1 bis 7 ausführt, wobei die Verarbeitungseinheit (100)
• Reservierungsparameter erfasst, die wenigstens den Ladeort und eine Zeitangabe beinhalten, und
• historische Nutzungsdaten der wenigstens einen Ladestation an diesem Ladeort erfasst, und
• in Abhängigkeit von den historischen Nutzungsdaten und der Zeitangabe eine Wahrscheinlichkeit bestimmt, dass an der Ladestation eine Reservierung einer Lademöglichkeit möglich sein wird, und
• einen Vergleich der Wahrscheinlichkeit mit einem vorwählbaren Wahrscheinlichkeitsschwellenwert durchführt, und
• in Abhängigkeit des Vergleichs und einer Vorlaufzeit der Ladestation eine Reservierung der Ladestation vornimmt.

9. Vorrichtung nach Anspruch 8, **dadurch gekennzeichnet, dass** die Verarbeitungseinheit (100) bei einer Überschreitung des Wahrscheinlichkeitsschwellenwert durch die bestimmte Wahrscheinlichkeit den Nutzer des Elektrofahrzeugs mittels einer ersten Rückmeldung informiert.

10. Vorrichtung nach Anspruch 8 oder 9, **dadurch gekennzeichnet, dass** die Verarbeitungseinheit (100) bei einer Überschreitung des Wahrscheinlichkeitsschwellenwert durch die bestimmte Wahrscheinlichkeit bei Erreichen der Vorlaufzeit der Ladestation die Reservierung vornimmt, wobei insbesondere vorgesehen ist, dass der Nutzer über die Reservierung mittels einer zweiten Rückmeldung informiert wird.

11. Vorrichtung nach einem der Ansprüche 8 bis 10, **dadurch gekennzeichnet, dass** die Verarbeitungseinheit (100) die Lademöglichkeit in Abhängigkeit
• vom Belegungszustand, und/oder
• von einer Reservierungsvergütung, und/oder
• des Wetters
in einem Beobachtungszeitraum der wenigstens einen Ladestation am Ladeort reserviert,
wobei insbesondere vorgesehen ist, dass der Beobachtungszeitraum von der Zeitangabe abhängt.

12. Vorrichtung nach einem der Ansprüche 8 bis 11, **dadurch gekennzeichnet, dass** die Verarbeitungseinheit (100) die Lademöglichkeit in Abhängigkeit der durchschnittlichen Ladezeit an der wenigstens einen Ladestation reserviert, wobei insbesondere vorgesehen ist, dass bei der Reservierung
• die zur Beladung erforderliche Energiemenge, und/oder
• die zur Beladung erforderliche Leistung, und/oder
• eine minimale oder maximale Ladezeit, und/oder
• eine maximale Wartezeit, und/oder eine maximale Reservierungsvergütung,
berücksichtigt wird.

13. Zentrale Servereinrichtung mit einer Vorrichtung nach einem der Ansprüche 8 bis 12 oder zur Ausführung eines Verfahrens nach einem der Ansprüche 1 bis 7, wobei die zentrale Servereinrichtung
• ein erstes Empfangsmittel zur Erfassung der Reservierungsparameter und
• ein zweites Empfangsmittel zur Erfassung der historischen Nutzungsdaten und
• ein Sendemittel zur Aussendung der Reservierung aufweist,
wobei insbesondere vorgesehen ist, dass die zentrale Servereinrichtung eine Verarbeitungseinheit zur Bestimmung von Lademöglichkeiten an wenigstens einer Ladestation am Ladeort in Abhängigkeit der historischen Nutzungsdaten aufweist.

14. Computerverfahren zur Durchführung eines Verfahrens nach einem der Ansprüche 1 bis 7, insbesondere in einer zentralen Servereinrichtung nach Anspruch 13 oder in einer auf einem mobilen Endgerät ablaufende Applikation.

15. Computerlesbares Medium mit einem Computerverfahren nach Anspruch 14.
